# EUROPEAN PATENT SPECIFICATION

(11) **EP 1 804 150 B1**
(45) Date of publication and mention of the grant of the patent: **13.01.2010**
(21) Application number: 06124994.2
(22) Date of filing: 29.11.2006
(51) Int. Cl.: G05D 21/02

(54) **Microfluidic device for electrochemically regulating pH of fluid and method of regulating pH of fluid using the microfluidic device**
Mikrofluidische Vorrichtung zur elektrochemischen Regulierung des pH-Werts einer Flüssigkeit und Verfahren zur Regulierung des pH-Werts einer Flüssigkeit unter Verwendung der mikrofluidischen Vorrichtung.
Dispositif microfluidique de régulation électrochimique du pH des fluides et procédé de régulation du pH des fluides utilisant ce dispositif microfluidique.

(30) Priority: 21.12.2005 KR 20050126918
(43) Date of publication of application: 04.07.2007
(73) Proprietor: Samsung Electronics Co., Ltd., Suwon-si, Gyeonggi-do (KR)
(72) Inventor: Lee, Hun-joo, Jongno-gu, Seoul (KR); Kim, Joon-ho, Bundang-gu, Seongnam-si, Gyeonggi-do (KR); Hwang, Kyu-youn, Incheon-si (KR)
(74) Representative: Grünecker, Kinkeldey, Stockmair & Schwanhäusser Anwaltssozietät

(56) References cited:
- EP-A- 1 314 472
- WO-A-03/045557
- WO-A-2005/085796
- US-A1- 2005 191 620
- GES I A ET AL: "Thin-film IrOx pH microelectrode for microfluidic-based microsystems" 15 August 2005 (2005-08-15), BIOSENSORS & BIOELECTRONICS, ELSEVIER SCIENCE PUBLISHERS, BARKING, GB, PAGE(S) 248-256 , XP004981148 ISSN: 0956-5663 Abstract * page 248, left-hand column, line 1 - page 249, left-hand column, line 14 * * page 255, right-hand column, lines 33-52; figure 1 *

## Description

The present invention relates to a microfluidic device for electrochemically regulating a pH of fluid therein and a method of regulating a pH of fluid in a microfluidic device using the microfluidic device.

A microfluidic device is a device including an inlet, an outlet, a reaction chamber, and a microchannel connecting the inlet, the outlet, and the reaction chamber. The microfluidic device also includes a micropump for transferring fluids, a micromixer for mixing the fluids, a microfilter for filtering the fluids, etc., in addition to the microchannel.

Microfluidic devices are well known to those of ordinary skill in the art and are used in microanalysis devices such as Lab-on-a-chips (LOCs), which perform a series of biological analysis processes including cell enrichment, cell lysis, biomolecule refinement, nucleic acid amplification and separation, protein separation, hybridization reaction, and detection.

Each step needs a different pH in order to perform such various biological analysis processes as described above. In a biological analysis process, a conventional method of regulating pH is performed by adding or removing an acid solution, a basic solution, a neutral solution or a buffer solution. However, when regulating pH, the addition or removal of such a pH-regulating solution in a microfluidic device requires a separate device and process. Also, a sample solution in the microfluidic device is undesirably diluted.

Such problems regarding the addition of a pH-regulating solution or the need for a separate device may be serious in a microfluidic device using microvolumes. In addition, the dilution can also be a problem when taking or amplifying a target sample. Moreover, when the added pH-regulating material may act as an inhibitor in a biological analysis process that will be performed afterward, the added pH-regulating material should be removed

As a method for solving the problems arising with the conventional method of externally Injecting a pH-regulating reagent a method using electrolysis can be used For example, a pH can be regulated using an electrotytic device including an anode chamber, a cathode chamber, and a separation membrane between the anode and cathode chambers.

However, In the conventional method, when a solution flowing Into the chambers contacts the separation membrane, the separation membrane swells, and thus changes In shape and size, thereby leading to a change In volume of the chambers. In addition, due to small electrodes, there is a large difference in resistance between the electrodes. Furthermore, an electric current locally flows, and thus leads to a higher pH near the anode electrode. Thus, pH cannot be uniformly regulated. In addition, pH in each of the chambers changes too slowly to enable efficient biological assays such as a cell lysis process.

EP-A-1314472 A1 describes a multilayered microfluidic device having a monolithic structure. Said device can be used for pH measurements.

US 2005/0191620 A1 describes a detection device for the detection of analytes in a fluid using membrane and particle base detectors.

WO 03/045557 A2 describes a microfluidic device, a method of fabricating such device. Said device has various structures for supporting the membrane.

The present Invention provides a microfluidic device for electrochemically regulating a pH of fluid with a high efficiency and which prevents the swelling of a chamber separation membrane.

The present Invention also provides a method of regulating a pH of fluid In a microfluidic device through electrolysis

The present invention is solved on the bases of claim 1 to 15.

According to an aspect of the present invention, there is provided a microfluidic device for electrochemically regulating a pH of a fluid, the device comprising: an Ion exchange membrane; an anode chamber a side of which Is a surface of the Ion exchange membrane and which Includes a ladder-shaped anode electrode and an anode electrode support part; and a cathode chamber a side of which is the other surface of the ion exchange membrane and which includes a cathode electrode, wherein the ladder-shaped anode electrode is formed on a surface of the anode electrode support part, openings are formed In the anode electrode support part to conform to the shape of the ladder-shaped anode electrode, and the opposite surface of the anode electrode support part contacts and supports the Ion exchange membrane.

The anode electrode support part may be formed of a printed circuit board (PCB).

The microfluidic device may further comprise a pillar structure on the cathode electrode, the pillar structure contacting and supporting the ion exchange membrane.

Each of the anode and cathode chambers may further comprise a gas outlet.

The cathode electrode may be formed of a metal adsorbing hydrogen gas, and the anode electrode may be formed of a metal that has a higher standard oxidization potential and that does not react with water.

The cathode electrode may be formed of palladium (Pd).

The anode electrode may be formed of a material selected from the group consisting of copper (Cu), lead (Pb), silver (Ag), chromium (Cr), titanium (Ti), nickel (Ni), zinc (Zn), iron (Fe), and tin (Sn).

The ion exchange membrane may transmit an electric current and may do not transmit ions and gases generated in each of the cathode and anode chambers as a result of electrolysis.

Each of the cathode and anode chambers may further comprise an inlet through which a fluid flows in and an outlet through which a fluid flows out.

Each of the cathode and anode chambers may further comprise a micropump pumping a fluid in and out.

According to another aspect of the present invention, there is provided a method of electrochemically regulating a pH of a fluid in the above-described microfluidic device, the method comprising: a) flowing a solution containing ions having a higher or lower standard oxidization potential than water into an anode chamber; b) flowing a solution containing ions having a lower standard reduction potential than water into a cathode chamber; and c) regulating a pH of each of the solutions that flows into the anode chamber and cathode chamber by inducing electrolysis in each of the anode and cathode chambers by applying an electric current between anode and cathode electrodes.

The ions having a lower standard oxidization potential than water flowed into the anode chamber may be at least one selected from the group consisting of NO₃, F, SO₄²⁻ PO₄³⁻ and CO₃²⁻.

The ions having a higher standard oxidization potential than water flowed into the anode chamber may be Cl⁻.

The ions having a lower standard reduction potential than water flowed into the cathode chamber may be at least one selected from the group consisting of Na⁺, K⁺, Ca²⁺ Mg²⁺, and Al³⁺.

The pH may be regulated according to the direction in which an electric current is applied, the magnitude of the electric current, the duration of the electric current application, the width of electrodes, or the thickness of the ion exchange membrane.
FIG. 1 is a side view illustrating a microfluidic device according to an embodiment of the present invention;
FIG. 2 is an exploded view of the microfluidic device of FIG. 1;
FIGS. 3A, 3B, and 3C are respectively a perspective view, a side view, and a plan view of an anode electrode and an anode electrode support part of the microfluidic device of FIG. 1;
FIG. 4A is a view for explaining the swelling of an ion exchange membrane when a microfludic device does not include a ladder-shaped anode electrode and an anode electrode support part, and a cathode chamber includes a pillar structure;
FIG. 4B is a view for explaining the swelling of an ion exchange membrane when a ladder-shaped anode electrode, an anode electrode support part, and a pillar structure in a cathode chamber are not formed;
FIG. 5 illustrates a process of manufacturing an anode electrode and an anode electrode support part of a microfluidic device according to an embodiment of the present invention;
FIG. 6A is a photograph of an anode electrode and an anode electrode support part of a microfluidic device according to an embodiment of the present invention;
FIG. 6B is a photograph of an anode electrode and an anode electrode support part of a microfluidic device according to another embodiment of the present invention;
FIG. 6C is a photograph of an anode electrode that has not a ladder shape and an anode electrode support part manufactured in Comparative Example 1;
FIG. 7 show photographs of parts of a microfluidic device according to an embodiment of the present invention and the microfluidic device assembled from the parts.
FIG. 8A is photographs of an ion exchange membrane before and 1-minute after solution injection into the anode and cathode chambers of a microfluidic device of Example 1;
FIG. 8B is photographs of an ion exchange membrane before and 1-minute after solution injection into the anode and cathode chambers of a microfluidic device of Example 2
FIG. 8C is photographs of an ion exchange membrane before and 1-minute after solution injection into the anode and cathode chambers of a microfluidic device of Comparative Example 1;
FIG. 9A is a photograph of the microfluidic device of Example 1 in which a gas was not generated in the anode electrode after electrolysis, wherein a cathode electrode was formed of palladium, and the anode electrode was formed of lead;
FIG. 9B is an enlarged photograph of FIG. 9A;
FIG. 10A is a photograph of the microfluidic device of Example 2 in which a gas was generated in the anode electrode after electrolysis, wherein a cathode electrode was formed of palladium, and the anode electrode was formed of gold; and
FIG. 10B is an enlarged photograph of FIG. 10A.

The present invention provides a microfluidic device for electrochemically regulating a pH of a fluid.

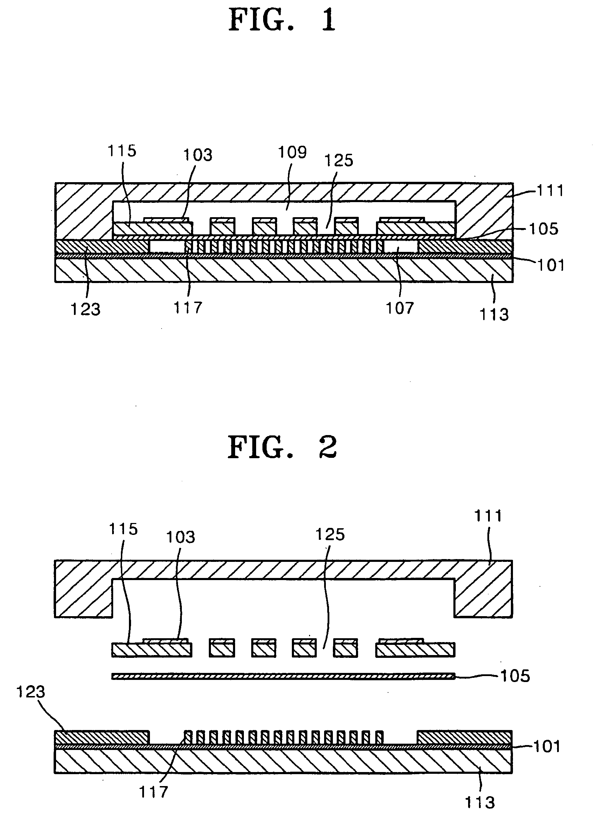

FIG. 1 is a sectional view of a microfluidic device according to an embodiment of the present invention, and FIG. 2 is an exploded view of FIG. 1.

Referring to FIGS. 1 and 2, the microfluidic device includes: an ion exchange membrane 105; an anode chamber 109 a side of which is a surface of the ion exchange membrane 105 and which includes a ladder-shaped anode electrode 103 and an anode electrode support part 115 supporting the anode electrode 103; and a cathode chamber 107 a side of which is the other surface of the ion exchange membrane 105 and which includes a cathode electrode 101. The ladder-shaped anode electrode 103 is formed on a surface of the anode electrode support part 115, and openings 125 are formed in the anode electrode support part 115 to conform to the shape of the ladder-shaped anode electrode 103. The opposite surface of the anode electrode support part 115 contacts and supports the ion exchange membrane 105.

In the microfluidic device according to an embodiment of the present invention, the anode chamber and the cathode chamber refer to spaces that can accommodate materials such as a fluid. The chamber, the anode chamber, and the cathode chamber may be micro-chambers which can accommodate materials with a volume of a microliter or less, but are not limited thereto. The chamber can be selected from the group consisting of a cell lysis chamber, a nucleic acid separation/refinement chamber, a nucleic acid amplification chamber, a hybridization chamber, and a signal detection chamber. The chamber can be connected to other various chambers through microchannels. Therefore, the microfluidic device according to an embodiment of the present invention can be a LOC which can electrochemically regulate the pH of a fluid containing biomolecules.

Referring to FIGS. 1 and 2, other sides of the anode chambers 109 are defined by an anode chamber substrate 111, and other sides of the cathode chamber 107 are defined by cathode chamber substrates 113 and 123.

In the microfluidic device of FIGS. 1 and 2, the anode electrode support part 115 supports the ion exchange membrane 105 and prevents swelling of the ion exchange membrane 105, thereby minimizing a change in volume of the chambers. In addition, the ladder shape of the anode electrode 103 facilitates current flow and enables efficient pH regulation.

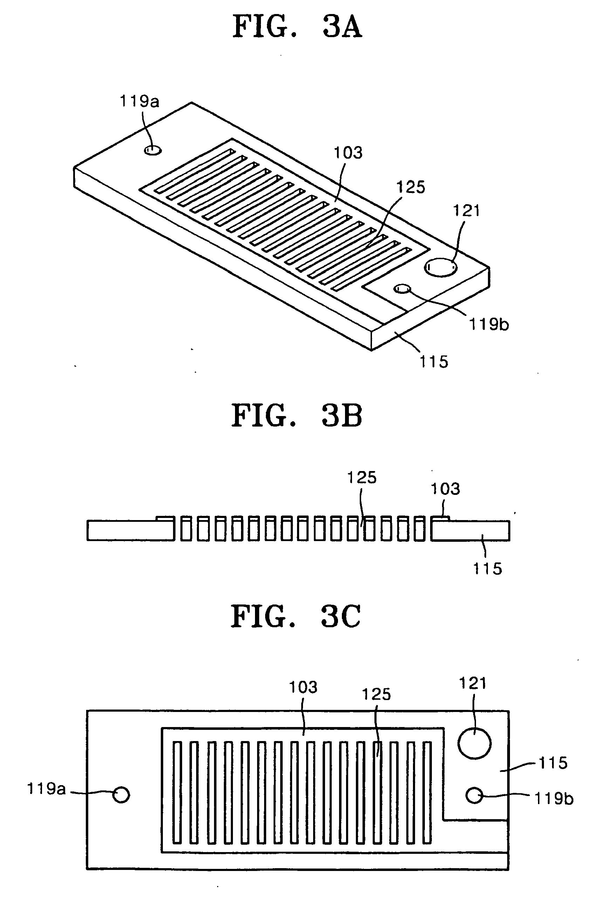

FIGS. 3A, 3B, and 3C are respectively a perspective view, a side view, and a plan view of the anode electrode and the anode electrode parts of the microfluidic device of FIGS. 1 and 2.

Referring to FIGS. 3A through 3C, the ladder-shaped anode electrode 103 is formed on a surface of the anode electrode support part 115, and openings 125 are formed to conform to the shape of the ladder-shaped anode electrode 103. The anode electrode support part 115 may include an inlet 119a through which a fluid flows in and an outlet 119b through which a fluid flows out. The anode electrode support part 115 may further include a power connection part 121 connecting the cathode electrode 101 and a power source (not shown).

In the microfluidic device according to the present invention, the length of the ladder-shaped anode electrode 103, the width of the openings 125, the width of lateral unit electrodes between the openings 125, etc., can be easily determined by one of ordinary skill in the art and are not limited to specific ranges.

Referring to FIGS. 1 and 2, the microfluidic device includes a pillar structure 117 formed on the cathode electrode 101. The pillar structure 117 contacts and supports the ion exchange membrane 105. The pillar structure 117 can effectively adsorb biomolecules, such as cells.

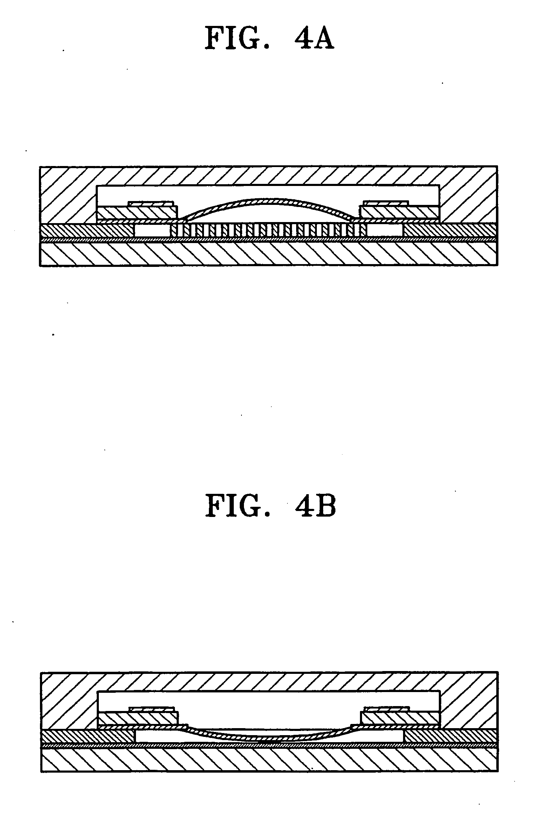

FIG. 4A is a view for explaining the swelling of the ion exchange membrane when the ladder-shaped anode electrode and the anode electrode support part are not formed, and FIG. 4B is a view for explaining the swelling of the ion exchange membrane when the ladder-shaped anode electrode, the anode electrode support part, and the pillar structure are not formed.

Referring to FIG. 4A, when a microfluidic device includes a conventional anode electrode and a pillar structure in the cathode chamber and does not includes the anode electrode support part, the ion exchange membrane seriously swell towards the anode chamber. In this case, a fluid continuously flows over the pillar structure in which a drop in pressure is small, so that the pillar structure cannot effectively adsorb, for example, cells.

Referring to FIG. 4B, when a microfluidic device includes a conventional anode electrode and does not includes a pillar structure in the cathode chamber and the anode electrode support part, the ion exchange membrane seriously swells toward the cathode chamber.

However, as described above, in the microfluidic device according to the present invention, the ion exchange membrane 105 is supported by the anode electrode support part 115 and the pillar structure 117, so that the swelling of the ion exchange membrane 105 is almost completely prevented, thereby minimizing a change in volume of the chambers.

In a microfluidic device according to an embodiment of the present invention, the anode electrode support 115 may be formed of one selected from the group consisting of a printed circuit board (PCB), a silicon wafer, glass, quartz, a metal, and a plastic.

The anode electrode support part 115 may be formed of a PCB. When a PCB is used as the anode electrode support part 115, it is easy to process the PCB. In addition, the width of openings transmitting an electric current can be reduced, so that more lateral unit electrodes can be formed. Thus, the resistance is reduced, pH can be uniformly regulated, and the effect of the pillar structure is maximized. In addition, when the microfluidic device is manufactured on a mass scale, the production costs are low. For example, a method of forming openings in a PCB costs about 100 times less than a method of forming openings in a glass substrate using a sand blasting method.

In an embodiment of the present invention, each of the anode and cathode chambers may further include a gas outlet.

In an embodiment of the present invention, the cathode electrode may be formed of a metal adsorbing hydrogen gas, and the anode electrode may be formed of a metal having a higher standard oxidization potential than water and which does not react with water. In this case, a gas is not generated in both of the anode and cathode chambers. Thus, an additional gas outlet is not required for the anode and cathode chambers. In addition, the ion exchange membrane and the pillar structure can be disposed as close as possible.

The cathode electrode is not limited to a certain metal, and can include any metal which can adsorb hydrogen gas.

For example, the cathode electrode can be formed of Pd. Pd is known to be capable of adsorbing a large amount of hydrogen (Bhadra Munasiri, et al., J. Electroanal. Chem., pp 333-337, 1992). When the cathode electrode is formed of Pd, Pd can prevent the generation of gas by adsorbing hydrogen gas generated near the cathode electrode as a result of the electrolysis of water. Accordingly, Pd can increase the pH of a solution near the cathode electrode since OH-generated by water electrolysis is not adsorbed.

Moreover, the anode electrode is not limited to a certain metal, and may be formed of any metal which has a higher standard oxidization potential than water and does not react with water.

When electrolyzing water, oxygen gas generated at an anode electrode forms bubbles, and the production of hydrogen ions lowers the pH of a solution. However, the microfluidic device according to the present invention using a metal having a higher standard oxidization potential than water does not generate gas, because, instead of the water being electrolyzed, the metal is oxidized. In addition, even a small amount of oxygen, which may be generated in a condition, such as a rise in voltage, a change in solute, etc., form a metal oxide by combining with the metal, so that bubbles due to oxygen are not generated.

A metal that can react with water is not suitable for the anode electrode of the microfluidic device, even through the metal has a higher standard oxidation potential than water. Examples of metals that are not suitable for the anode electrode include K, Ca, Na, Mg, etc.

Furthermore, a metal that so quickly forms an oxide film and increases resistance is not suitable for the anode electrode, even through the metal has a higher standard oxidation potential than water. For example, Al, which very quickly oxidizes into alumina, is not suitable for the anode electrode.

For example, the anode electrode can be formed of a metal selected from the group consisting of Cu, Pb, Ag, Cr, Ti, Ni, Zn, Fe, and Sn.

The shape, structure, size, etc., of a microfluidic device according to the present invention are not limited.

According to the present invention, the ion exchange membrane transmits an electric current but does not transmits ions and gas generated as a result of electrolysis in the anode and cathode chambers. The ion exchange membrane may transmit an electric current and may not transmit hydrogen ions and hydroxide ions.

The ion exchange membrane can be a cation exchange membrane or an anion exchange membrane.

In an embodiment of the present invention, the cation exchange membrane transmits cations but almost completely prevents the transmission of anions. On the other hand, the anion exchange membrane transmits anions but almost completely prevents the transmission of cations. For example, the cation exchange membrane may be a strong acid exchange membrane including -SO₃-(available from Nafion) or a weak acid exchange membrane including -COO-. The anion exchange membrane may be a strong base exchange membrane including N⁺(CH₃) or a weak base exchange membrane including N(CH₃)₂. The cation and anion exchange membranes are well known to those of ordinary skill in the art, and can be easily purchased. For example, the ion exchange membranes may include Nafion^{™} of Dupont, Dowex^{™} of Aldrich, Diaion^{™} of Aldrich, etc., which are available on the market.

In an embodiment of the present invention, each of the cathode and anode chambers may further include an inlet through which a fluid flows in and an outlet through which a fluid flows out.

In an embodiment of the present invention, each of the cathode and anode chambers may further include a micropump pumping a fluid in and out.

In a microfluidic device according to an embodiment of the present invention, a solution containing ions having a higher or lower standard oxidization potential than water, for example, an electrolyte, can be flowed into the anode chamber 509. Ions having a lower standard oxidation potential than water can be at least one kind of anions selected from among NO₃⁻, F⁻, SO₄²⁻, PO₄³⁻ and CO₃²⁻. In addition, ions having a higher standard oxidation potential than water can be Cl⁻. However, the present invention is not limited to the ions defined above. When an anode chamber solution contains a compound having a lower standard oxidation potential than water, and electrolysis is performed using a microfluidic device according to an embodiment of the present invention, water is electrolyzed in the anode chamber and produces oxygen gas and H⁺ ions. As a result, the pH of the anode chamber solution is lowered due to the H⁺ ions. In addition, as described above, when the anode electrode is formed of a metal that has a higher standard oxidation potential than water and does not react with metal, the metal is oxidized, and oxygen gas is not generated. Cl⁻ ions, which have a higher standard oxidation potential than water, can be specially used for the purpose of cell lysis only.

In a microfluidic device according to another embodiment of the present invention, a solution containing ions having a lower standard reduction potential than water can be flowed into the cathode chamber. Examples of ions having a lower standard reduction potential than water include cations, such as Na⁺, K⁺, Ca²⁺, Mg²⁺, and AI³⁺, etc., but are not limited thereto. In this case, when electrolysis is performed using a microfluidic device according to an embodiment of the present invention, water is electrolyzed in the cathode chamber and generates hydrogen gas and OH⁻ ions. As a result, the pH of the cathode chamber solution increases due to the OH⁻ ions. In addition, as described above, when the cathode electrode is formed of a metal adsorbing hydrogen gas, the generated hydrogen gas is adsorbed by the cathode electrode, and thus gas bubbles are not generated.

In the present invention, the anode chamber and the cathode chamber can additionally include an inlet through which a solution flows in and an outlet through which a solution flows out. It is not necessary that the inlet and the outlet are separately formed. Instead, a single port can be used as both the inlet and the outlet.

In an embodiment of the present invention, the cathode chamber and the anode chamber may further include a micropump pumping a fluid in and out.

A microfluidic device according to an embodiment of the present invention can be manufactured using a general method. For example, parts of the microfluidic device are manufactured, and then assembled into a microfluidic device.

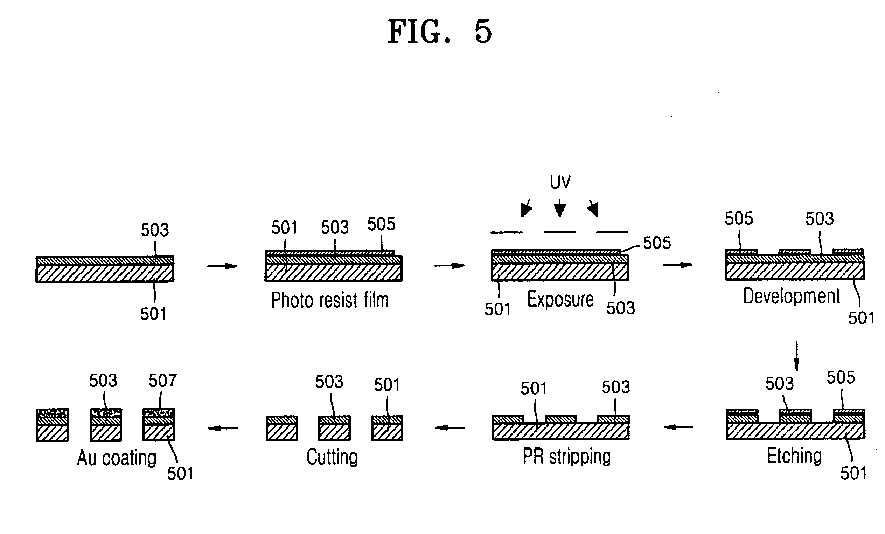

FIG. 5 illustrates a process of manufacturing an anode electrode and an anode electrode support part of a microfluidic device according to an embodiment of the present invention.

Referring to FIG. 5, a photoresist film 505 is deposited on a PCB 501 coated with a copper film 503. Next, the photoresist film 505 is exposed to UV light through a ladder-shaped mask and developed. Next, a portion of the copper film 503 exposed through the mask is etched, and the photoresist film 505 is stripped off. Next, the exposed PCB 501 is cut to form openings, and gold 507 is coated on the remaining copper film 503, thereby manufacturing an anode electrode and an anode electrode support part of a microfluidic device according to an embodiment of the present invention.

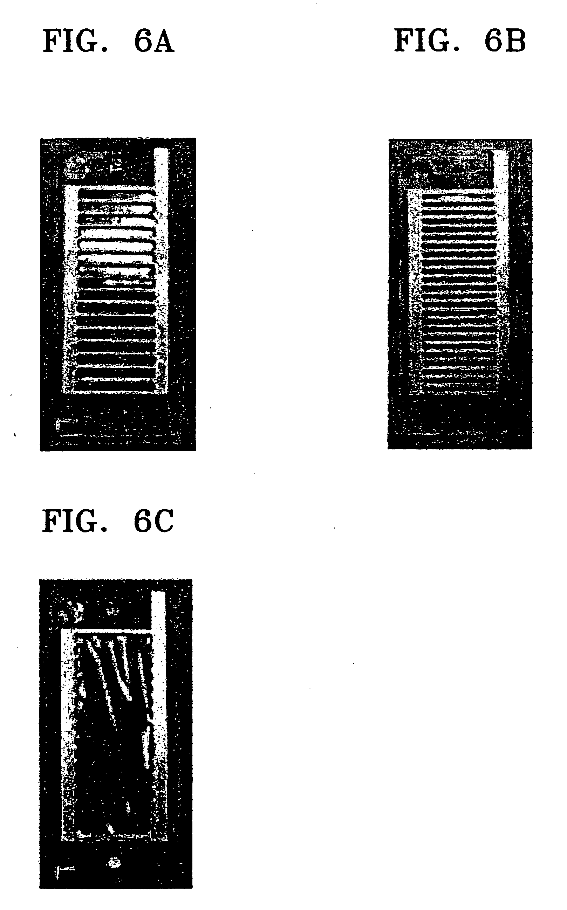

FIG. 6A is a photograph of an anode electrode and an anode electrode support part of a microfluidic device according to an embodiment of the present invention. FIG. 6B is a photograph of an anode electrode and an anode electrode support part of a microfluidic device according to another embodiment of the present invention.

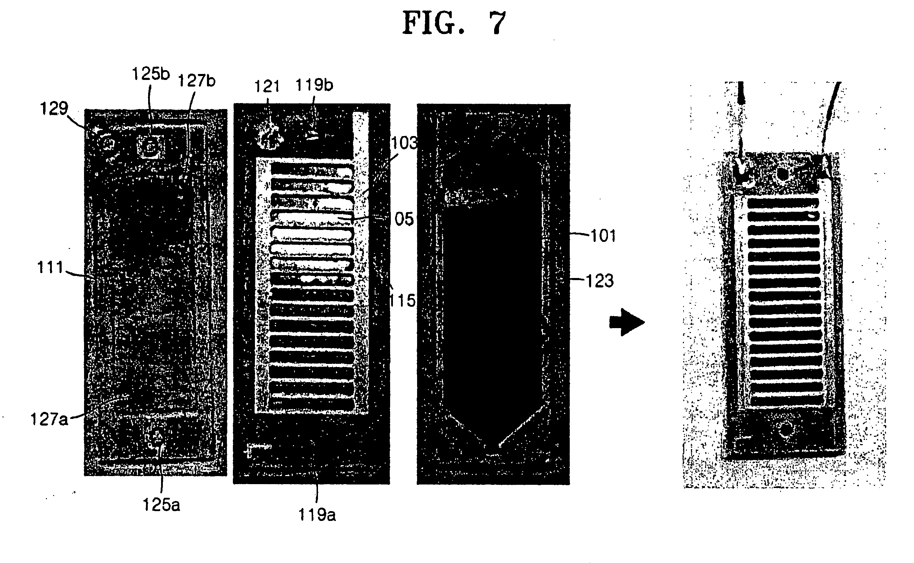

FIG. 7 is photographs of parts of a microfluidic device according to an embodiment of the present invention and the microfluidic device assembled from the parts.

Referring to FIG. 7, a pillar structure is not formed in the cathode chamber. An inlet 125a and an outlet 125b, which respectively match an inlet 119a and an outlet 119b 115 of the cathode chamber in the anode electrode support part, are formed in an anode chamber substrate 111. In addition, an inlet 127a and an outlet 127b of the anode chamber and a power connection part 129, which matches a power connection part 121 in the anode electrode support part 115, are formed in the anode chamber substrate 111.

The present invention provides a method of electrochemically regulating a pH of a fluid, the method comprising: a) flowing a solution containing ions having a higher or lower standard oxidization potential than water into an anode chamber; b) flowing a solution containing ions having a lower standard oxidization potential than water into a cathode chamber; and c) regulating a pH of each of the solutions that flows into the anode chamber and cathode chamber by inducing electrolysis in each of the anode and cathode chambers by applying an electric current between anode and cathode electrodes.

In an embodiment of the pH regulating method according to the present invention, examples of anions having a lower standard oxidization potential than water, anions having a higher standard oxidization potential than water, and cations having a higher standard oxidization potential than water are the same as described above. Operations a) and b) above can be simultaneously or sequentially performed.

The pH can be regulated according to the direction in which an electric current is applied, the magnitude of the electric current, the duration of the electric current application, the width of electrodes, or the thickness of the ion exchange material. The direction of an electric current, the magnitude of the electric current, the duration of the electric current application, the width of electrodes, and the thickness of the ion exchange material can be varied according to a target pH, the volume of the chamber, etc., and can be experimentally determined by one of ordinary skill in the art.

When a sample solution containing NaCl, which is contained in most bio-sample solutions, is flowed into the anode and cathode chambers and subjected to electrolysis, Cl⁻ ions, not water, is electrolyzed in the anode chamber. As a result, chlorine gas and hydrogen ions are generated. The generated hydrogen ions are less than hydroxide ions generated in the cathode chambers. The hydrogen ions are generated as a result of the reaction between the chlorine gas and water, and the amount of hydrogen ions varies according to the condition in which the chlorine gas is dissolved. Thus, pH regulation is difficult. In the present invention, to solve this problem, a compound having a lower standard oxidation potential than water and a compound having a lower standard reduction potential than water are used in the anode chamber and the cathode chamber, respectively. However, only for the purpose of cell lysis, a sample solution containing NaCl can be flowed into the anode and cathode chambers and subjected to electrolysis to allow cell lysis in the cathode chamber.

In a pH regulating method according to an embodiment of the present invention, since a cathode chamber solution containing a compound having a lower standard reduction potential than water is contained in the cathode chamber, water can be electrolyzed into hydrogen gas and OH- ions. In addition, since an anode chamber solution containing a compound having a lower standard oxidation potential than water is contained in the anode, water is electrolyzed and generates oxygen gas and H⁺ ions. In other words, the cathode chamber solution has an alkaline pH, and the anode chamber solution has an acidic pH.

As described above, when the anode electrode is formed of a metal that has a higher standard oxidation potential than water and that does not react with metal, and the cathode electrode is formed of a metal adsorbing hydrogen gas, gas generation in each of the anode and cathode chambers can be prevented.

### < Example 1 >

### Manufacture of a microfluidic device for pH regulation according to the present invention

A ladder-shaped anode electrode and an anode electrode support part were manufactured using the method illustrated in FIG. 5.

In particular, a photoresist film was deposited on a PCB coated with a copper film. Next, the photoresist film was exposed to UV light through a ladder-shaped mask and developed. Next, a portion of the copper film exposed through the mask was etched, and the photoresist film was stripped off. Next, the exposed PCB was cut to form openings, and gold was coated on the remaining copper film.

FIG. 6A is a photograph of the manufactured anode electrode and anode electrode support part.

Referring to FIG. 6A, the anode electrode support part has a width of 14 mm and a length of 34 mm. The width of openings is 1.0 mm, and the width of lateral unit electrodes is 0.5 mm. A cation membrane containing -SO₃-Na⁺ is attached under the anode electrode support part. An inlet and an outlet of the cathode chamber respectively for flowing a solution in and out, and a power connection part are formed in the anode electrode support part.

A microfluidic device according to the present invention was manufactured using the anode electrode and the anode electrode support part manufactured above.

FIG. 7 shows photographs of parts of a microfluidic device manufactured using the anode electrode and the anode electrode support part manufactured in the above example and a photograph of the microfluidic device as an end product.

Of the top three photographs in FIG. 7, the first photograph shows an anode chamber substrate. An inlet and outlet of the cathode chamber respectively for flowing in and out a solution, and an inlet and outlet of the anode chamber respectively for flowing in and out a solution, and a power connection part are formed in the anode chamber substrate.

The second photograph in FIG. 7 shows the anode electrode and the anode electrode support part manufactured above.

The third photograph in FIG. 7 shows a cathode electrode and a cathode substrate. A pillar structure is not formed in the cathode substrate. The cathode electrode was formed of palladium, and the thickness of the cathode substrate, i.e., the height of the cathode chamber, was 100 µ m.

The three parts were assembled, and conducting wires were connected to the cathode and anode electrodes, thereby manufacturing the microfluidic device according to the present invention. Each of the cathode and anode chambers had a volume of 10 *µℓ.*

### < Example 2 >

### Manufacture of a microfluidic device for pH regulation according to the present invention

A ladder-shaped anode electrode and an anode electrode support part were manufactured in the same manner as in Example 1, except that gold was coated on the anode electrode, and the width of openings and the width of lateral unit electrodes were 0.5 mm.

FIG. 6B is a photograph of the manufactured anode electrode and anode electrode support part.

A microfluidic device according to the present invention was manufactured using the anode electrode and anode electrode support part manufactured above in the same manner as in Example 1.

### < Comparative Example 1 >

### Manufacture of a microfluidic device for pH regulation

A ladder-shaped anode electrode and an anode electrode support part were manufacture in the same manner as in Example 1, except that a rectangular anode electrode with an opening at the center was formed, an anode electrode support part with an opening corresponding to the opening of the anode electrode was formed, and gold was coated on the anode electrode.

FIG. 6C is a photograph of the anode electrode and the anode electrode support part manufactured in Comparative Example 1.

A microfluidic device according to the present invention was manufactured using the anode electrode and anode electrode support part manufactured above in the same manner as in Example 1.

### <Experimental Example 1 >

### Confirmation of swelling of ion exchange membrane

Whether the ion exchange membrane of each of the microfluidic devices manufactures in Examples 1 and 2 and Comparative Example 1 swelled or not, and the degree of swelling were observed.

10 µℓ of a 55 mM Na₂SO₄ solution was injected into each of the cathode and anode chambers of each of the microfluidic devices, and 1 minute later, whether the ion exchange membrane swelled or not was observed.

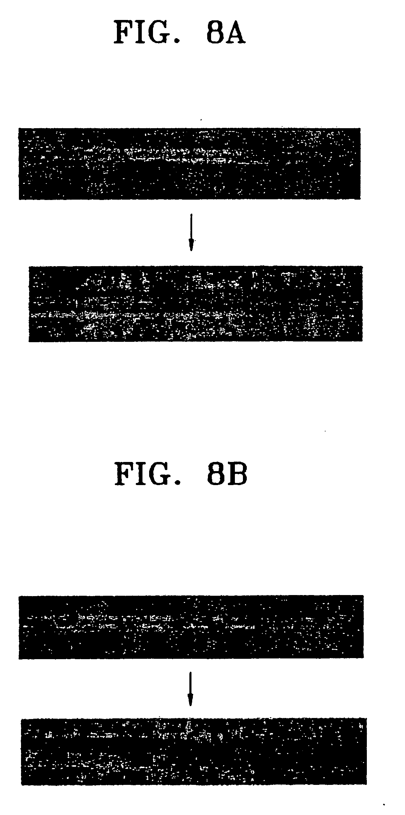

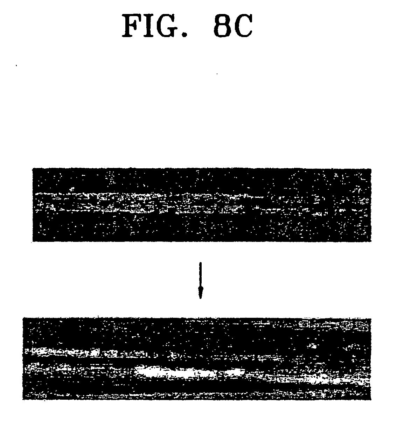

FIG. 8A shows photographs of the ion exchange membrane before and 1-minute after solution injection into the anode and cathode chambers of the microfluidic device of Example 1. FIG. 8B shows photographs of ion exchange membrane before and 1-minute after solution injection into the anode and cathode chambers of the microfluidic device of Example 2. FIG. 8C shows photographs of ion exchange membrane before and 1-minute after solution injection into the anode and cathode chambers of the microfluidic device of Comparative Example 1.

Referring to FIGS. 8A through 8C, the least change in volume of the ion exchange membrane occurred in Example 1. The volume of the ion exchange membrane slightly changed in Example 2. However, the largest change in volume of the ion exchange membrane occurred in Comparative Example 1.

### < Experimental Example 2 >

### Measurement of resistance of a microfluidic device

10 *µ*ℓ of a 55 mM Na₂SO₄ solution were injected into each of the cathode and anode chambers of the microfluidic devices manufactured in Examples 1 and 2 and Comparative Example 1, and resistance between the cathode and anode electrodes was measured.

As a result, the resistance of the microfluidic device according to Example 1 was about 750 Ω, the resistance of the microfluidic device according to Example 2 was about 430 Ω, and the resistance of the microfluidic device according to Comparative Example 1 was about 4500 Ω. The area of the electrodes was a main factor affecting the resistance.

From the results above, it is apparent that the ladder-shaped anode electrode of a microfluidic device according to the present invention reduces the resistance between electrodes and facilitates the flow of a electric current, thereby allowing efficient pH regulation.

### < Experimental Example 3 >

### Conformation of gas generation in a microfluidic device

Whether gas was generated in each of the microfluidic devices manufactured in Examples 1 and 2 after electrolysis was confirmed.

10 µℓ of a 55 mM Na₂S0₄ solution were injected into each of the cathode and anode chambers of the microfluidic devices manufactured in Examples 1 and 2, and a current of 2 mA was applied across the cathode and anode electrodes.

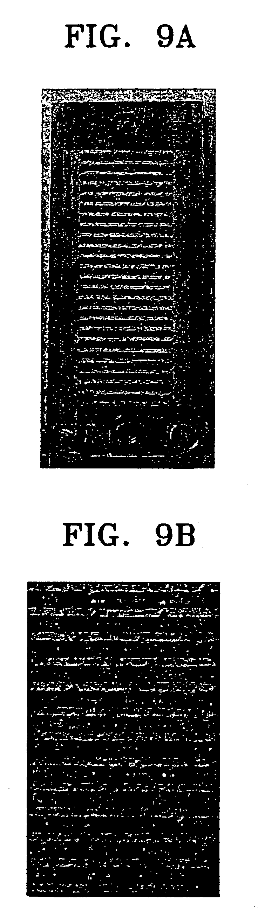

FIG. 9A is a photograph of the microfluidic device of Example 1 in which a gas was not generated in the anode electrode after electrolysis, wherein a cathode electrode was formed of palladium, and the anode electrode was formed of lead. FIG. 9B is an enlarged photograph of FIG. 9A. Although not shown, a gas was not generated in the cathode electrode.

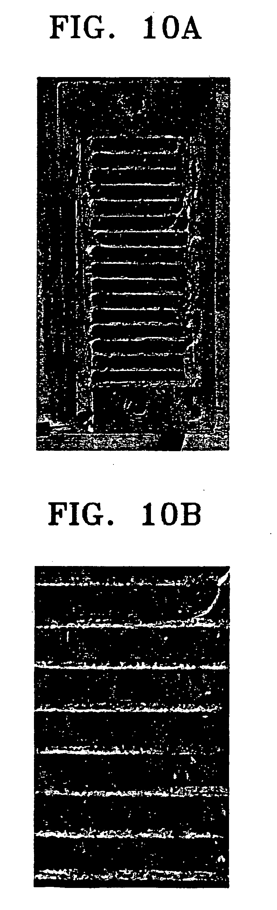

FIG. 10A is a photograph of the microfluidic device of Example 2 in which a gas was generated in the anode electrode after electrolysis, wherein a cathode electrode was formed of palladium, and the anode electrode was formed of gold. FIG. 10B is an enlarged photograph of FIG. 10A. Although not shown, a gas was not generated in the cathode electrode.

The results support that, when the cathode electrode is formed of a metal absorbing hydrogen gas and the anode electrode is formed of a metal that has a higher standard oxidization potential than water and that does not react with water, gas generation can be prevented during electrolysis.

As described above, in a microfluidic device according to the present invention, the swelling of the chamber separation membrane is prevented, and thus a change in volume of the chambers is minimized. As a result, a desired amount of sample can smoothly flow into the chambers. In addition, the anode electrode is formed in a wide ladder-shape and facilitates the flow of an electric current, thereby allowing efficient pH regulation. In a pH regulating method according to the present invention, a pH of a fluid in the microfluidic device can be rapidly and easily regulated without swelling of the chamber separation membrane during electrolysis.

## Claims

1. A microfluidic device for electrochemically regulating a pH of a fluid, the device comprising:
an ion exchange membrane (105);
an anode chamber (109) a side of which is a surface of the ion exchange membrane (105) and which includes a ladder-shaped anode electrode (103) and an anode electrode support part (115); and
a cathode chamber (107) a side of which is the other surface of the ion exchange membrane (105) and which includes a cathode electrode (101);
wherein the ladder-shaped anode electrode (103) is formed on a surface of the anode electrode support part (115); openings (125) are formed in the anode electrode support part (115) to conform to the shape of the ladder-shaped anode electrode (103), and the opposite surface of the anode electrode support part (115) contacts and supports the ion exchange membrane (105).

2. The microfluidic device of claim 1, wherein the anode electrode support part (115) is formed of a printed circuit board (PCB).

3. The microfluidic device of claim 1, further comprising a pillar structure (117) on the cathode electrode (101), the pillar structure (117) contacting and supporting the ion exchange membrane (105).

4. The microfluidic device of claim 1, wherein each of the anode chamber (109) and cathode chamber (107) further comprises a gas outlet.

5. The microfludic device of claim 1, wherein the cathode electrode (101) is formed of a metal adsorbing hydrogen gas, and the anode electrode (103) is formed of a metal that has a higher standard oxidization potential and that does not react with water.

6. The microfluidic device of claim 5, wherein the cathode electrode (101) is formed of palladium.

7. The microfluidic device of claim 5, wherein the anode electrode (103) is formed of a material selected from the group consisting of copper (Cu), lead (Pb), silver (Ag), chromium (Cr), titanium (Ti), nickel (Ni), zinc (Zn), iron (Fe) and tin (Sn).

8. The microfluidic device of claim 1, wherein the ion exchange material (105) transmits an electric current and does not transmit ions and gas generated in each of the cathode chamber (107) and anode chamber (109) as a result of electrolysis.

9. The microfluidic device of claim 1, wherein each of the cathode chamber (107) and anode chamber (109) further comprises an inlet (119a) through which a fluid flows in and an outlet (119b) through which a fluid flows out.

10. The microfluidic device of claim 1, wherein each of the cathode chamber (107) and anode chamber (109) further comprises a micropump pumping a fluid in and out.

11. A method of electrochemically regulating a pH of a fluid using the microfluidic device of claim 1, the method comprising:
a) flowing a solution containing ions having a higher or lower standard oxidization potential than water into the anode chamber (109);
b) flowing a solution containing ions having a lower standard reduction potential than water into the cathode chamber (107); and
c) regulating a pH of each of the solutions that flows into the anode chamber (109) and cathode chamber (107) by inducing electrolysis in each of the anode chamber (109) and cathode chamber (107) by applying an electric current between anode electrode (103) and cathode electrode (101).

12. The method of claim 11, wherein the ions having a lower standard oxidation potential than water flowed into the anode chamber (109) is at least one selected from the group consisting of NO₃ , F⁻, SO₄²-, pO₄³⁻ and CO₃²⁻.

13. The method of claim 11, wherein the ions having a higher standard oxidization potential than water flowed into the anode chamber (109) are Cl⁻.

14. The method of claim 11, wherein the ions having a lower standard reduction potential than water flowed into the cathode chamber (107) is at least one selected from the group consisting of Na⁺, K⁺, Ca²⁺, Mg²⁺ and Al³⁺.

15. The method of claim 11, wherein the pH is regulated according to the direction in which an electric current is applied, the magnitude of the electric current, the duration of the electric current application, the width of electrodes, or the thickness of the ion exchange material.

## Patentansprüche

1. Mikrofluidische Vorrichtung zur elektrochemischen Regulierung eines pH-Wertes einer Flüssigkeit, wobei die Vorrichtung umfasst:
eine lonenaustauschmembran (105);
eine Anodenkammer (109), wobei eine Seite davon eine Oberfläche der lonenaustauschmembran (105) ist und welche eine leiterförmige Anodenelektrode (103) und ein Anodenelektrodestützbauteil (115) beinhaltet; und
eine Kathodenkammer (107), wobei eine Seite davon die andere Oberfläche der lonenaustauschmembran (105) ist und die eine Kathodenelektrode (101) beinhaltet;
wobei die leiterförmige Anodenelektrode (103) auf einer Oberfläche des Anodenelektrodestützbauteils (115) aufgebracht ist; Öffnungen (125) in das Anodenelektrodestützbauteil (115) eingebracht sind, um mit der Form der leiterförmigen Anodenelektrode (103) überein zu stimmen, und die gegenüberliegende Oberfläche des Anodenelektrodestützbauteils (115) die lonenaustauschmembran (105) berührt und unterstützt.

2. Mikrofluidische Vorrichtung nach Anspruch 1, wobei das Anodenelektrodestützbauteil (115) auf eine Leiterplatte (PCB) aufgebracht ist.

3. Mikrofluidische Vorrichtung nach Anspruch 1, weiterhin umfassend eine Säulenstruktur (117) auf der Kathodenelektrode (101), wobei die Säulenstruktur (117) die lonenaustauschmembran (105) berührt und unterstützt.

4. Mikrofluidische Vorrichtung nach Anspruch 1, wobei jede der Anodenkammer (109) und Kathodenkammer (107) zusätzlich einen Gasauslass umfasst.

5. Mikrofluidische Vorrichtung nach Anspruch 1, wobei die Kathodenelektrode (101) aus einem Metall, das Wasserstoffgas adsorbiert, gebildet ist, und die Anodenelektrode (103) aus einem Metall gebildet ist, das ein höheres Standardoxidationspotential besitzt und das nicht mit Wasser reagiert.

6. Mikrofluidische Vorrichtung nach Anspruch 5, wobei die Kathodenelektrode (101) aus Palladium gebildet ist.

7. Mikrofluidische Vorrichtung nach Anspruch 5, wobei die Anodenelektrode (103) aus einem Material, ausgewählt aus der Gruppe bestehend aus Kupfer (Cu), Blei (Pb), Silber (Ag), Chrom (Cr), Titan (Ti), Nickel (Ni), Zink (Zn), Eisen (Fe) und Zinn (Sn) gebildet ist.

8. Mikrofluidische Vorrichtung nach Anspruch 1, wobei das lonenaustauschmaterial (105) einen elektrischen Strom durchlässt und nicht Ionen und Gas, das in jeder der Kathodenkammer (107) und Anodenkammer (109) als Ergebnis der Elektrolyse gebildet wird, überträgt.

9. Mikrofluidische Vorrichtung nach Anspruch 1, wobei jede der Kathodenkammer (107) und Anodenkammer (109) zusätzlich einen Einlass (119a), durch den eine Flüssigkeit einfließt, und einen Auslass (119b), durch den eine Flüssigkeit ausfließt, umfasst.

10. Mikrofluidische Vorrichtung nach Anspruch 1, wobei jede der Kathodenkammer (107) und Anodenkammer (109) zusätzlich eine Mikropumpe umfasst, die eine Flüssigkeit herein- und herauspumpt.

11. Verfahren zur elektrochemischen Regulierung eines pH-Wertes einer Flüssigkeit unter Verwenden der mikrofluidischen Vorrichtung nach Anspruch 1, wobei das Verfahren umfasst:
a) Einfließen einer Lösung, die Ionen enthält, die ein höheres oder niedrigeres Standardoxidationspotential als Wasser besitzen, in die Anodenkammer (109);
b) Einfließen einer Lösung, die Ionen enthält, die ein niedrigeres Standardreduktionspotential als Wasser besitzen, in die Kathodenkammer (107); und
c) Regulieren eines pH-Wertes von jeder der Lösungen, die in die Anodenkammer (109) und Kathodenkammer (107) fließen durch Induzieren einer Elektrolyse in jeder der Anodenkammer (109) und Kathodenkammer (107) durch Anwenden eines elektrischen Stroms zwischen der Anodenelektrode (103) und Kathodenelektrode (101).

12. Verfahren nach Anspruch 11, wobei die Ionen, die ein niedrigeres Standardoxidationspotential als Wasser besitzen und in die Anodenkammer (109) einfließen gelassen werden, mindestens eines ausgewählt aus der Gruppe bestehend aus NO₃⁻, F⁻, SO₄²⁻, PO₄³⁻ und CO₃²⁻ ist.

13. Verfahren nach Anspruch 11, wobei die Ionen, die ein höheres Standardoxidationspotential als Wasser besitzen und in die Anodenkammer (109) einfließen gelassen werden, er sind.

14. Verfahren nach Anspruch 11, wobei die Ionen, die ein niedrigeres Standardreduktionspotential als Wasser besitzen und in die Kathodenkammer (107) einfließen gelassen werden, mindestens eines ausgewählt aus der Gruppe bestehend aus Na⁺, K⁺, Ca²⁺, Mg²+, und Al³⁺ ist.

15. Verfahren nach Anspruch 11, wobei der pH-Wert durch die Richtung, in die ein elektrischer Strom angelegt wird, die Stärke des elektrischen Stroms, die Dauer der Applikation des elektrischen Stroms, die Breite der Elektroden, oder die Dicke des lonenaustauschmaterials reguliert wird.

## Revendications

1. Dispositif microfluidique pour la régulation électrochimique du pH d'un fluide, ledit dispositif comprenant :
une membrane échangeuse d'ions (105) ;
une chambre anodique (109) dont un côté est une surface de la membrane échangeuse d'ions (105) et qui contient une électrode anodique en forme d'échelle (103) et un élément support d'électrode anodique (115) ; et
une chambre cathodique (107) dont un côté est l'autre surface de la membrane échangeuse d'ions (105) et qui contient une électrode cathodique (101) ;
dans lequel l'électrode anodique en forme d'échelle (103) est formée sur une surface de l'élément support d'électrode anodique (115) ; des ouvertures (125) sont formées dans l'élément support d'électrode anodique (115) pour épouser la forme de l'électrode anodique en forme d'échelle (103), et la surface opposée de l'élément support d'électrode anodique (115) est en contact avec la membrane échangeuse d'ions (105) et supporte celle-ci.

2. Dispositif microfluidique de la revendication 1, dans lequel l'élément support d'électrode anodique (115) est formé d'une carte de circuit imprimé (PCB).

3. Dispositif microfluidique de la revendication 1, comprenant en outre une structure de type pilier (117) sur l'électrode cathodique (101), ladite structure de type pilier (117) étant en contact avec la membrane échangeuse d'ions (105) et supportant celle-ci.

4. Dispositif microfluidique de la revendication 1, dans lequel la chambre anodique (109) et la chambre cathodique (107) comprennent chacune en outre une sortie de gaz.

5. Dispositif microfluidique de la revendication 1, dans lequel l'électrode cathodique (101) est formée d'un métal adsorbant l'hydrogène gazeux, et l'électrode anodique (103) est formée d'un métal qui a un potentiel d'oxydation standard supérieur à celui de l'eau et qui ne réagit pas avec l'eau.

6. Dispositif microfluidique de la revendication 5, dans lequel l'électrode cathodique (101) est formée de palladium.

7. Dispositif microfluidique de la revendication 5, dans lequel l'électrode anodique (103) est formée d'un matériau choisi dans le groupe constitué du cuivre (Cu), du plomb (Pb), de l'argent (Ag), du chrome (Cr), du titane (Ti), du nickel (Ni), du zinc (Zn), du fer (Fe) et de l'étain (Sn).

8. Dispositif microfluidique de la revendication 1, dans lequel la matière échangeuse d'ions (105) transmet un courant électrique et ne transmet pas des ions et de gaz générés dans chacune des chambres cathodique (107) et anodique (109) par électrolyse.

9. Dispositif microfluidique de la revendication 1, dans lequel chacune des chambres cathodique (107) et anodique (109) comprend en outre une entrée (119a) par laquelle un fluide entre en circulant et une sortie (119b) par laquelle un fluide sort en circulant.

10. Dispositif microfluidique de la revendication 1, dans lequel chacune des chambres cathodique (107) et anodique (109) comprend en outre une micropompe faisant entrer et sortir un fluide par pompage.

11. Procédé de régulation électrochimique du pH d'un fluide au moyen du dispositif microfluidique de la revendication 1, ledit procédé comprenant les étapes consistant à :
a) faire circuler une solution contenant des ions ayant un potentiel d'oxydation standard supérieur ou inférieur à celui de l'eau, dans la chambre anodique (109) ;
b) faire circuler une solution contenant des ions ayant un potentiel de réduction standard inférieur à celui de l'eau, dans la chambre cathodique (107) ; et
c) réguler le pH de chacune des solutions qui circule dans la chambre anodique (109) et la chambre cathodique (107) en provoquant une électrolyse dans la chambre anodique (109) et dans la chambre cathodique (107) par application d'un courant électrique entre l'électrode anodique (103) et l'électrode cathodique (101).

12. Procédé de la revendication 11, dans lequel les ions ayant un potentiel d'oxydation standard inférieur à celui de l'eau mis à circuler dans la chambre anodique (109) consistent en au moins un ion choisi dans le groupe constitué de NO₃⁻, F⁻,SO₄²⁻ , PO₄³⁻ et CO₃²⁻.

13. Procédé de la revendication 11, dans lequel les ions ayant un potentiel d'oxydation standard supérieur à celui de l'eau mis à circuler dans la chambre anodique (109) sont les ions Cl⁻.

14. Procédé de la revendication 11, dans lequel les ions ayant un potentiel de réduction standard inférieur à celui de l'eau mis à circuler dans la chambre cathodique (107) consistent en au moins un ion choisi dans le groupe constitué de Na⁺, K⁺, Ca²⁺, Mg²+ et Al³⁺.

15. Procédé de la revendication 11, dans lequel le pH est régulé selon la direction dans laquelle un courant électrique est appliqué, l'amplitude du courant électrique, la durée d'application du courant électrique, la largeur des électrodes, ou l'épaisseur de la matière échangeuse d'ions.
